# EUROPEAN PATENT APPLICATION

(11) **EP 1 881 495 A1**
(43) Date of publication of application: **23.01.2008**
(21) Application number: 07111214.8
(22) Date of filing: 27.06.2007
(51) Int. Cl.: G11B 7/135

(54) **Object lens and optical pick-up device having the same**

(30) Priority: 21.07.2006 KR 20060068762; 10.04.2007 KR 20070034851
(71) Applicant: SAMSUNG ELECTRONICS CO., LTD., Suwon-si Gyeonggi-do 442-742 (KR)
(72) Inventor: Yoo, Jang Hoon, Yangcheon-gu Seoul (KR); Kim, Myoung Seok, Seoul (KR); Park, Se June, Gwangjin-gu Seoul (KR)
(74) Representative: Clark, David James

(57) **Abstract**

An object lens and an optical pick-up device having the same capable of recording and/or reproducing a plurality of types of optical discs, the optical pick-up device including: a light emitting part (12,14,16) that emits lights having different wavelengths corresponding to the plurality of types of optical discs, and a light collecting part (30,32,34) that focuses a light having a wavelength corresponding to a type of a loaded optical disc and emitted from the light emitting part to form spots on the loaded optical disc. Accordingly, various types of optical discs using different wavelengths can be compatibly driven in an optical recording/reproducing apparatus capable of recording and/or reproducing high/low density optical discs.

## Description

Aspects of the present invention relate to an object lens and an optical pick-up device having the same and more particularly, to an object lens and an optical pick-up device having the same that compatible with various kinds of optical discs using different wavelengths in an optical recording/reproducing apparatus for recording information on and/or reproducing information from an optical disc.

According to the development of image and sound media, an optical disc capable of recording large quantities of high definition image and sound information has been developed and is commonly used. An optical disc is a recording medium that is recorded on and/or played back by laser beam. Conventionally, an optical disc (such as a CD (Compact Disc) or a DVD (Digital Versatile Disc)) has primarily been used. However, because of the limit of a recording capacity of the conventional optical disc (CD or DVD), new types of optical discs having large recording capacities of more than several tens of gigabytes (such as a Blu-Ray Disc Recordable/Rewritable (BD) or a High Definition DVD (HD-DVD)) are being developed and gradually being used more widely.

The recording capacity of the optical disc is determined by a size of an optical spot, which is focused onto the surface of the optical disc. The size of the optical spot (S) is in proportion to a wavelength (L) of a laser beam, and is in inverse proportion to a numerical aperture (NA) of an object lens. Accordingly, in order to record a large amount of information on the optical disc, a laser beam having a short wavelength and an object lens having a large numerical aperture should be used. For example, information is recorded on and/or reproduced from a CD by using near infrared light having a wavelength of 780 nm and an object lens having a numerical aperture of about 0.45. A DVD, which has a recording capacity larger (about six to eight times) than a CD, uses red light having a wavelength of 650 nm or 630 nm and an object lens having a numerical aperture of 0.6 (0.65 when the recordable type). If a DVD has a diameter of 120 mm and a track pitch of 0.74 µm, it has a recording capacity of 4.7 GB or more (single sided). Such a DVD is not adequate for recording high definition (HD) moving image data because a recording capacity of 23 GB or more (single sided) is required, for example, to record HD moving image data having a running time of 135 minutes.

In order to meet the demand of the high density recording capacity, great efforts have been given to the development of a next generation DVD, or a high definition optical disc having a narrower track pitch (hereinafter, referred to as an HD-DVD), using light having a wavelength shorter than red light (such as blue light having a wavelength of 405 nm to 408 nm), and an object lens having a numerical aperture larger than 0.6. As the numerical aperture of the object lens is increased for the high density capacity, a thickness of the optical disc must be decreased according to a tolerance due to a tilt of the optical disc. Accordingly, in the step from CD to DVD the thickness reduced from 1.2 mm to 0.6 mm, and an HD-DVD has a thickness of 0.6 mm. The numerical aperture of the object lens increased from 0.45 for a CD to 0.65 for a DVD and an HD-DVD. In the case of HD-DVD, a blue light source is used to achieve the desired recording capacity. However, the problem in developing optical discs having new standards is compatibility with the existing optical discs. Moreover, one of the recently developed high density optical recording media having a more increased recording capacity is a BD. In the case of a BD, blue light having a short wavelength (405 nm to 408 nm) and an object lens having a numerical aperture of about 0.85 are used. A BD has a thickness of 0.1 mm and has a recording capacity about ten times as large as a DVD.

As the optical discs of new standards, such as an HD-DVD, a BD, and the like, are developed by manufacturers, consumers have difficulty in choosing various types of optical discs and storing data therein because the optical discs of different standards coexist in a market and the compatibility with the optical discs of other standards is not guaranteed. For example, because an HD-DVD and a BD do not have a compatible disc standard, two optical recording/reproducing apparatuses, respectively adequate for an HD-DVD and a BD, must be used in order to record and play back an HD-DVD and a BD. Accordingly, users demand a universal optical recording/reproducing apparatus that is capable of recording and playing back all kinds of optical discs, including a BD, an HD-DVD, a DVD, and a CD. That is, an optical recording/reproducing apparatus equipped with an optical system in which one optical pick-up device can compatibly drive various kinds of optical discs using different wavelengths is needed for a user's convenience.

According to an aspect of the present invention, there is provided an optical pick-up device capable of recording and/or reproducing a plurality of types of optical discs having four different recording densities, the optical pick-up device including: a light emitting part that emits lights having three different wavelengths corresponding to the plurality of types of optical discs, such that the light emitting part emits light having a wavelength corresponding to a type of a loaded optical disc; and a light collecting part that focuses the lights having the wavelength corresponding to the type of the loaded optical disc and emitted from the light emitting part to form a spot on the loaded optical disc.

Suitably, the plurality of types of optical discs includes an HD-DVD, a DVD, and a CD.

Suitably, the light emitting part may include a plurality of light sources that emits lights having wavelengths of around 400 nm, 600 nm, and 700 nm.

Suitably, the light emitting part emits light having a wavelength corresponding to a format of at least one of the plurality of types of optical discs.

Suitably, the optical pick-up device further includes a hologram element that is provided between at least one of the plurality of light sources and the light collecting part, and a light detecting part that detects a signal for acquiring position information of the light collecting part by using light diffracted from the hologram element.

Suitably, the light collecting part is an object lens that uses different numerical apertures according to the wavelengths of the light emitted from the light emitting part, to compatibly reproduce the plurality of types of optical discs.

Suitably, the object lens is sectioned into at least two regions of concentric circles on an optical axis such that a first region that includes the optical axis is commonly used for all of the different wavelengths and a second region that is adjacent to the first region is commonly used for at least two wavelengths.

Suitably, the object lens further includes a third region that is adjacent to the second region and is used for a single wavelength having an intermediate length of the different wavelengths.

Suitably, the object lens is provided with at least three different regions on an optical axis, and uses the regions differently according to the respective types of the optical discs.

Suitably, the object lens uses at least one of the three regions in common when recording or reproducing the plurality of types of optical discs.

Suitably, the optical pick-up device further includes an optical path converting part that changes a progressing direction of the light emitted from the light emitting part and guides the light to the light collecting part.

Suitably, the optical path converting part includes a relay lens that converts the light from the light emitting part into parallel light rays before guiding the light onto the light collecting part.

According to another aspect of the present invention, there is provided an optical pick-up device capable of recording and/or reproducing a plurality of types of optical discs, the optical pick-up device including: a plurality of light sources that emit lights having three different wavelengths corresponding to the plurality of types of optical discs; and a plurality of object lenses that focus a light, having a wavelength corresponding to a loaded optical disc, emitted from the plurality of light sources to form a spot on the loaded optical disc.

According to another aspect of the present invention, there is provided an object lens of an optical pick-up device capable of recording and/or reproducing a plurality of types of optical discs, wherein the object lens uses three different wavelengths of light and uses different numerical apertures according to the plurality of wavelengths to compatibly reproduce the plurality of types of optical discs having different thicknesses or using different wavelengths.

Suitably, the object lens uses at least three wavelengths.

Suitably, the object lens is sectioned into at least two regions of concentric circles on an optical axis, such that a first region that includes the optical axis is commonly used for three wavelengths, and a second region that is adjacent to the first region is commonly used for two wavelengths.

Suitably, the object lens is provided with a hologram lens on a partial surface.

Suitably, the object lens is sectioned into at least three regions of concentric circles on an optical axis, such that a first region that includes the optical axis is provided with a stepped area on a surface to be commonly used for three wavelengths, a second region that is adjacent to the first region is provided with a stepped area to restrict generation of aberration with respect to two wavelengths, and a third region that is adjacent to the second region is provided with a hologram lens on a surface to restrict generation of aberration with respect to one wavelength.

According to yet another aspect of the present invention, there is provided an optical pick-up device that uses a plurality of wavelengths to record and/or reproduce a plurality of types of optical discs having different thicknesses, the optical pick-up device include: a light source that emits a light having a wavelength corresponding to a type of a loaded optical discs; and a first object lens and a second object lens that use different numerical apertures according to the wavelength of the light emitted from the light source.

Suitably, the object lens is provided with a stepped area or a diffraction area on at least one surface that is commonly used when recording or reproducing any of the plurality of types of optical discs.

Suitably, a portion of the light diffracted from the object lens according to the wavelengths is used as a secondary diffraction light.

Suitably, a depth of a hologram of the object lens is determined based on a reference wavelength of the diffraction light that is in the range from 660 nm to 790 nm.

According to still another aspect of the present invention, there is provided an optical pick-up device capable of recording and/or reproducing a plurality of types of optical discs, the optical pick-up device including: first through third light sources that emit lights having first through third different wavelengths corresponding to the plurality of types of optical discs, each type of optical disc having a different recording capacity according to the corresponding one of the three emitted wavelengths; one or more object lenses that focus a light, having a wavelength corresponding to a loaded optical disc, emitted from the one or more light sources to form a spot on the loaded optical disc according to the type, the type being selectable between optical discs with four different recording capacities; and one or more light detecting parts to receive the light focused onto the optical disc and reflected from the optical disc to detect an information signal.

According to another aspect of the present invention, there is provided a method of recording and/or reproducing a plurality of types of optical discs having four different recording densities, the method including: emitting lights having three different wavelength corresponding to the plurality of types of optical discs; and focusing an emitted light having a wavelength corresponding to a type of a loaded optical disc to form a spot on the loaded optical disc.

According to the present invention there is provided an apparatus and method as set forth in the appended claims. Preferred features of the invention will be apparent from the dependent claims, and the description which follows.

For a better understanding of the invention, and to show how embodiments of the same may be carried into effect, reference will now be made, by way of example, to the accompanying diagrammatic drawings in which:
FIG. 1 is a schematic constitutional view of an optical pick-up device according to an embodiment of the present invention;
FIG. 2 is a view illustrating an optical spot formed on a CD by light having a wavelength of around 700 nm incident onto an object lens in the optical pick-up device according to an embodiment of the present invention;
FIG. 3 is a view illustrating an optical spot formed on a DVD by light having a wavelength of around 600 nm incident onto an object lens in the optical pick-up device according to an embodiment of the present invention;
FIG. 4 is a view illustrating an optical spot formed on an HD-DVD by light having a wavelength of around 400 nm incident onto an object lens in the optical pick-up device according to an embodiment of the present invention;
FIG. 5 is a view illustrating an optical spot formed on a CD by light having a wavelength of around 700 nm incident onto an object lens of a first example of design in the optical pick-up device according to an embodiment of the present invention;
FIG. 6 is a view illustrating an optical spot formed on a DVD by light having a wavelength of around 600 nm incident onto an object lens of a first example of design in the optical pick-up device according to an embodiment of the present invention; and
FIG. 7 is a view illustrating an optical spot formed on an HD-DVD by light having a wavelength of around 400 nm incident onto an object lens of a first example of design in the optical pick-up device according to an embodiment of the present invention.

Reference will now be made in detail to the present embodiments of the present invention, examples of which are illustrated in the accompanying drawings.

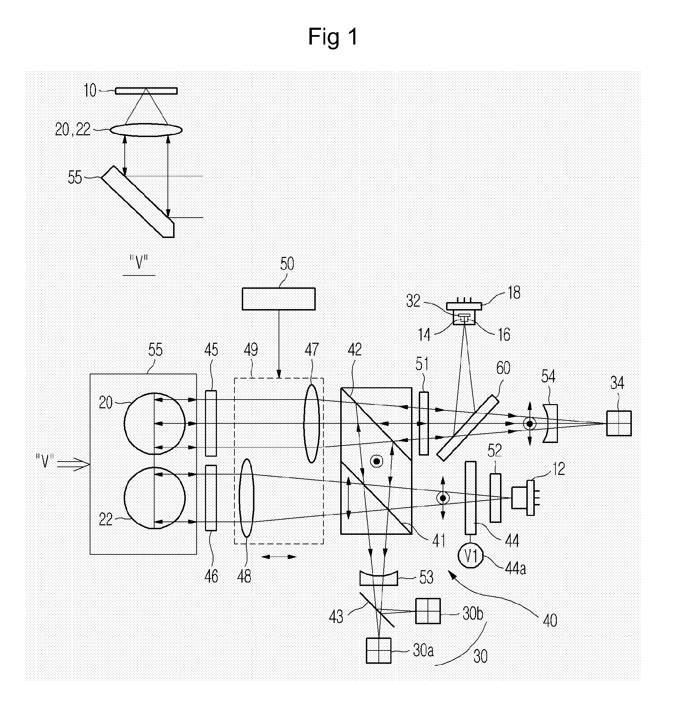

FIG. 1 is a schematic constitutional view of an optical pick-up device according to an embodiment of the present invention. The optical pick-up device has an optical structure and an optical path converting mechanism that is capable of compatibly driving various types of optical discs using different wavelengths and having different recording densities. In general, an optical pick-up device is a device that records information by irradiating a laser beam onto a signal recording surface of an optical disc and/or reproduces information recorded on an optical disc in a non-contact manner by receiving light reflected from a signal recording surface of an optical disc.

Referring to Fig. 1, the optical pick-up device can record information and/or reproduce information on various kinds of optical discs 10 that use different wavelengths and have different recording densities. The optical pick-up device includes: a plurality (for example, three) of light sources 12, 14, and 16 that respectively emit laser beams having different wavelengths corresponding to formats of the optical discs 10; a plurality (for example, two) of object lenses 20 and 22 that focus the light emitted from the plurality of light sources 12, 14, and 16 to form optical spots on signal recording surfaces of the optical disc 10; a plurality of light detecting parts 30, 32, and 34 that receive the light reflected from the optical disc 10 after being focused onto the optical discs 10 by the plurality of object lenses 20 and 22; and a plurality of optical path converting parts 40 and 60 that selectively guide a portion of the light emitted from the plurality of light sources 12, 14, and 16 to one of the plurality of object lenses 20 and 22 and selectively guide the light reflected from the optical discs 10 to one of the plurality of light detecting parts 30, 32, and 34.

The optical disc 10 may be any of various kinds of recording media that are capable of recording and/or reproducing information by laser beam, including a low density optical disc (such as a CD or a DVD) and a high density optical disc (such as a BD or an HD-DVD). The low density optical disc can be classified as a reproduce-only type (such as a CD, a CD-ROM, or a DVD-ROM) or a recordable type (such as an MD, a CD-R, a CD-RW, a DVD-R, a DVD-RW, a DVD+RW, or a DVD-RAM (DVD Random Access Memory)).

The plurality of light sources 12, 14 and 16 are configured as laser diodes that respectively emit laser beams having different wavelengths corresponding to the formats of the various types of optical discs 10 using different wavelengths. For example, the plurality of light sources may include a first light source 12 that emits blue light having a wavelength around 400 nm (specifically, 540 nm or less) that is adequate for an HD-DVD or a BD having a relatively high recording density. A second light source 14 emits red light having a wavelength around 600 nm (specifically, 600 nm to 660 nm) that is adequate for a DVD having a recording density lower than an HD-DVD. A third light source 16 emits infrared light having a wavelength around 700 nm (specifically, 700 nm to 800 nm) that is adequate for a CD having a recording density lower than a DVD. However, it is understood that according to other aspects, the plurality of light sources may include only two light sources (for example, a first light source adequate for HD-DVD or BD recording and a second light source adequate for DVD recording) or may include more than three light sources that emit light having different wavelengths. The light emitted from the first light source 12 passes through both of the object lenses 20 and 22, and the light emitted from the second and third light sources 14 and 16 selectively passes through only one of the plurality of object lenses 20 and 22. As shown in FIG. 1, the second light source 14 and the third light source 16 are integrally provided in a unitary light unit 18. However, it is understood that the second light source 14 and the third light source 16 may be separately provided in other aspects. The third light source 16 may, although not necessarily, be mounted separately from the second light source 14 and provided outside of the light unit 18.

The plurality of object lenses 20 and 22 focus the light emitted from the plurality of light sources 12, 14, and 16, and form optical spots on the signal recording surfaces of the optical discs 10. The plurality of object lenses 20 and 22 includes a first object lens 20 that has a small numerical aperture adequate for an HD-DVD, a DVD, or a CD to focus the light emitted from at least one of the plurality of light sources 12, 14, and 16, and a second object lens 22 that has a large numerical aperture adequate for a BD to focus the light emitted from at least one of the plurality of light sources 12, 14, and 16. However, it is understood that the plurality of object lenses 20 and 22 may include more than two object lenses such that the object lenses have more specific numerical apertures corresponding to the types of optical disc 10.

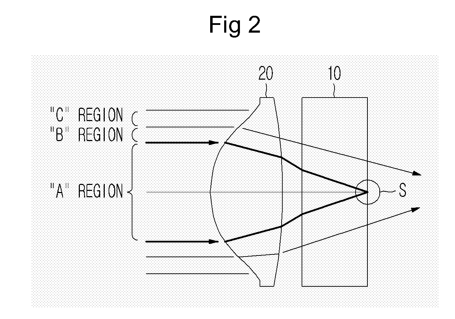

The first object lens 20 uses three wavelengths and is capable of compatibly playing back three or more types of optical discs 10 (HD-DVD, DVD, and CD) having different thicknesses or recording densities. The second object lens 22 is a BD lens. Parallel light rays may be irradiated onto the first object lens 20, as shown in FIGS. 2 to 4. The first object lens 20 uses the numerical apertures differently according to three wavelengths. That is, the first object lens 20 is sectioned into three regions of concentric circles on an optical axis. Specifically, a first region (an "A"region) includes the optical axis and is commonly used for three wavelengths, a second region (a "B" region) is adjacent to the first region and commonly used for two wavelengths, and a third region (a "C" region) is adjacent to the second region and used for only one wavelength. However, it is understood that the first object lens 20 need not necessarily be sectioned into three regions of concentric circles on the optical axis, and may be sectioned into two regions or more than three regions to use the numerical apertures differently. According to an aspect of the present invention, three wavelengths (around 400 nm, around 600 nm, and around 700 nm) are used in the first region (the "A" region), two wavelengths (around 400 nm and 600 nm) having the two lower wavelengths are used in the second region (the "B' region), and the wavelength having an intermediate length of three wavelengths (around 600 nm) is used in the third region (the"C'region).

As described above, the first object lens 20 may be provided with at least three sectioned regions that are used differently according to the respective kinds of the optical discs 10. Also, the first object lens 20 is provided with a stepped area or a diffraction area on at least one surface of the sectioned regions that is always used in common when recording or playing back the various types of the optical discs 10. A portion of the light diffracted from the first object lens 20 according to the wavelengths is used as a secondary diffraction light, thereby increasing diffraction efficiency. The object lenses 20 and 22 may perform in divergence or convergence to focus the light, and may have variable light use efficiency according to the wavelengths.

The plurality of light detecting parts 30, 32, and 34 receive the light reflected from the optical disc 10 after being focused onto the optical disc 10 by the plurality of object lenses 20 and 22, and detect an information signal and an error signal. The plurality of light detecting parts 30, 32, and 34 includes a first light detecting part 30 that receives the light reflected from the optical disc 10 after being emitted from the first light source 12 and focused onto the optical disc 10 by the first and second object lenses 20 and 22, and second and third light detecting parts 32 and 34 that receive the light reflected from the optical disc 10 after being emitted from the second and third light sources 14 and 16 and focused onto the optical disc 10 by the first object lens 20. However, it is understood that the plurality of light detecting parts 30, 32, and 34 may include more than three light detecting parts or two light detecting parts to detect the light reflected from the optical disc 10.

The first light detecting part 30 includes an HD-DVD detector 30a that detects the light reflected from an HD-DVD through the first object lens 20, and a BD detector 30b that detects the light reflected from a BD through the second object lens 22. The second and third light detecting parts 32 and 34 detect the light reflected from a DVD or a CD through the first object lens 20. The second light detecting part 32 is integrally provided with the second and third light sources 14 and 16 in the light unit 18. The third light detecting part 34 may be integrally provided with the second and third light sources 14 and 16 in the light unit 18, or may be mounted separately from the second and third light sources 14 and 16 and provided outside of the light unit 18.

The plurality of optical path converting parts 40 and 60 includes a first optical path converting part 40 that selectively guides a portion of the light emitted from the first light source 12 to one of the first and second object lenses 20 and 22 and guides the light reflected from the optical disc 10 through the first and second object lenses 20 and 22 to the first light detecting part 30. The plurality of optical path converting parts 40 and 60 further includes a second optical path converting part 60 that guides the light emitted from the second light source 14 or the third light source 16 to the first object lens 20 and guides the light reflected from the optical disc 10 through the first object lens 20 to the second and third light detecting parts 32 and 34. It is understood that according to other aspects of the present invention, the plurality of optical path converting parts 40 and 60 may include more than two optical path converting parts to guide the light.

The shown first optical path converting part 40 includes: a polarization beam splitter 41 that reflects or transmits the light irradiated from the first light source 12 according to polarization components of the light; a first beam splitter 42 that reflects the light irradiated from the first light source 12 and transmits the light irradiated from the second light source 14 and the third light source 16; a second beam splitter 43 that transmits the light irradiated from the first light source 12 and reflects the light irradiated from the second light source 14 and the third light source 16; a half-wave plate 44 that selectively changes the polarization components of the light incident onto the polarization beam splitter 41 from the first light source 12; a first quarter-wave plate 45 that changes the polarization components of the light reflected from the optical disc 10 after being focused onto the optical disc 10 by the first object lens 20; and a second quarter-wave plate 46 that changes the polarization components of the light reflected from the optical disc 10 after being focused onto the optical disc 10 by the second object lens 22. The first quarter-wave plate 45 and the second quarter-wave plate 46 are wave plates whose thicknesses are adjusted to create a quarter wavelength phase shift, and transform linearly polarized light into circularly polarized light by using double refraction and vice versa. The first optical path converting part 40 further includes an electric driving member 44a that electrically drives the half-wave plate 44. The polarization beam splitter 41 and the first beam splitter 42 may be integrally provided together as shown, but need not in all aspects.

First and second relay lenses 47 and 48 are mounted in optical paths between the light sources 12, 14, and 16 and the first and second object lenses 20 and 22, respectively, to collimate the light emitted from the light sources 12, 14 and 16 onto the first and second object lenses 20 and 22. It is understood that more relay lenses 47 and 48 may be provided to collimate the light and/or according to the number of object lenses 20 and 22 used in the optical pickup device. The first and second relay lenses 47 and 48 are supported together by a holder 49. The holder 49 can move back and forth along the light progressing direction by a driving part 50. A hologram element 51 is provided between the first relay lens 47 and the unitary light unit 18 in which the second and third light sources 14 and 16 and the second light detecting part 32 are disposed. A pickup servo signal for acquiring position information of the first and second object lenses 20 and 22 is produced by using the light diffracted from the hologram element 51.

A diffraction grating 52, which includes small slits formed with a regular gap on a surface of an optical material (such as a glass), is provided in front of the first light source 12 to diffract the light incident onto the half-wave plate 44 from the first light source 12 into three-beam segments for detecting a tracking signal. Light receiving lenses 53 and 54 are provided in front of the first light detecting part 30 and the third light detecting part 34, respectively, to improve the quality of the light incident onto the various types of optical discs 10 (BD, HD-DVD, DVD, and CD) and enlarge the sizes of the spots formed on the respective light detecting parts 30, 32, and 34, thereby increasing reliability. It is understood that the light receiving lenses 53 and 54 may be omitted or a third light receiving lens may be included in front of the second light detecting part 32 according to other aspects of the present invention. A reflecting member 55 is provided near the first and second object lenses 20 and 22 to change the progressing direction of the light reflected from the signal recording surfaces of the optical disc 10 and incident onto the reflecting member 55.

Hereinafter, the operating process and operational effect of the optical pick-up device having the object lenses 20 and 22 as structured above will be described with reference to FIG. 1. The optical pick-up device according to aspects of the present invention has an optical structure that is capable of compatibly recording and/or reproducing various types of optical discs 10 having different recording densities (such as HD-DVD, DVD, and CD) by using one object lens 20, or playing backing various types of optical discs 10 (such as BD, HD-DVD, DVD, and CD) using two object lenses 20 and 22. The light emitted from the light sources 12, 14, and 16 contains a p-polarized light component and an s-polarized light component at a predetermined ratio. This embodiment of the present invention will be explained on the example assumption that the light emitted from the light sources 12, 14, 16 contains primarily the s-polarized light component.

Referring to FIG. 1, the light having a short wavelength of around 400 nm that is emitted from the first light source 12 is diffracted from the diffraction grating 52 into the three-beam segments for detecting a tracking error signal. The diffracted light passes through the half-wave plate 44, and progresses toward the polarization beam splitter 41. The polarization beam splitter 41 transmits the s-polarized light component of the light emitted from the first light source 12, and reflects the p-polarized light component.

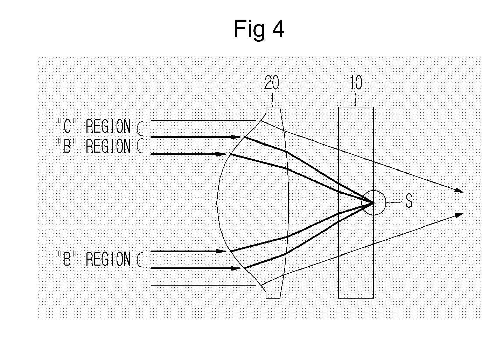

A portion of the light emitted from the first light source 12 passes through the polarization beam splitter 41 and the first beam splitter 42, and progresses toward the first and second object lenses 20 and 22. While passing through the relay lenses 47 and 48, the light is transformed into the parallel light rays. While passing through the first and second quarter-wave plates 45 and 46, the linearly polarized light is transformed into the circularly polarized light. The light having passed through the first and second quarter-wave plates 45 and 46 forms the optical spots (referred to by "S" in FIG. 4) on the signal recording surface of the optical disc 10 by the first and second object lenses 20 and 22, and is reflected from the optical disc 10. At this time, the rotational direction of the circularly polarized light becomes reverse to that of the light incident onto the optical disc 10.

The light reflected from the optical disc 10 passes through the first and second quarter-wave plates 45 and 46 via the first and second object lenses 20 and 22, and is transformed into the linearly polarized light to become the p-polarized light. The p-polarized light progresses toward the polarization beam splitter 41 and the first beam splitter 42 via the first and second relay lenses 47 and 48. A portion of the light that reaches the polarization beam splitter 41 and the first beam splitter 42 permeates the second beam splitter 43 and is detected from the first light detecting part 30 through the light receiving lens 53. As described above, the light emitted from the first light source 12 passes through both the first object lens 20 and the second object lens 22.

The light having long wavelengths of around 600 nm and 700 nm that is emitted from the second and third light sources 14 and 16 passes through the second optical path converting part 60, and progresses toward the first beam splitter 42. The first beam splitter 42 reflects the light from the first light source 12, and transmits the light from the second and third light sources 14 and 16. The hologram element 51 provided between the second optical path converting part 60 and the first beam splitter 42 transmits the light having a specific wavelength, and diffracts the light having other wavelengths. At this time, the light diffracted from the hologram element 51 is used as a primary diffraction light regardless of the wavelength.

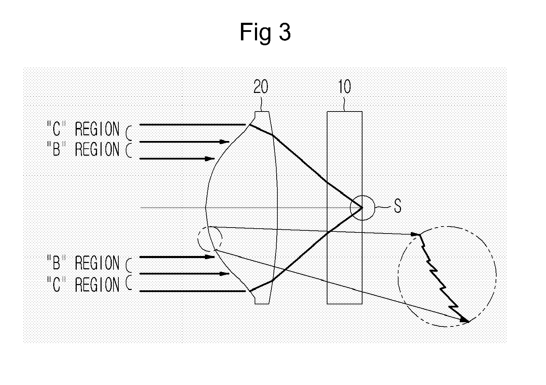

A portion of the light emitted from the second and third light sources 14 and 16 passes through the first beam splitter 42, and progresses toward the first object lens 20. While passing through the first relay lens 47, the light is transformed into the parallel light rays. While passing through the first quarter-wave plate 45, the linearly polarized light is transformed into the circularly polarized light. The light having passed through the first quarter-wave plate 45 forms the optical spots (referred to by "S" in FIGs. 2 and 3) on the signal recording surface of the optical disc 10 by the first object lens 20, and is reflected from the optical disc 10. At this time, the rotational direction of the circularly polarized light becomes reverse to that of the light incident onto the optical disc 10.

The light reflected from the optical disc 10 passes through the first quarter-wave plate 45 via the first object lens 20, and is transformed into the linearly polarized light to become the p-polarized light. The p-polarized light progresses toward the first beam splitter 42 via the first relay lens 47. A portion of the light that reaches the first beam splitter 42 permeates the second optical path converting part 60 and is detected from the second and third light detecting parts 32 and 34 through the light receiving lens 54. As described above, the light emitted from the second and third light sources 14 and 16 passes through only the first object lens 20.

As described above, the first object lens 20 is an HD-DVD/DVD/CD compatible lens that is capable of compatibly recording and/or reproducing various types of optical discs 10 (HD-DVD, DVD, and CD) having different recording densities by focusing the light from the second and third light sources 14 and 16 as well as the light from the first light source 12. When the parallel light rays are irradiated onto the first object lens 20 as shown in FIGS. 2 to 4, the best reproducing performance is achieved. Also, as shown in FIGS. 2 to 4, the first object lens 20 is sectioned into three regions of concentric circles on the optical axis to use the numerical apertures differently according to three wavelengths. The first region (the "A" region) including the optical axis is commonly used for three wavelengths, the second region (the "B" region) adjacent to the first region is commonly used for two wavelengths, and the third region (the"C'region) adjacent to the second region is used for one wavelength.

FIG. 2 is a view illustrating an optical spot formed on a CD type of optical disc 10 by light having a wavelength around 700 nm incident onto the object lens 20 in the optical pick-up device according to an embodiment of the present invention. Information can be recorded on and/or reproduced from a CD by using the numerical aperture of the first region (the "A" region) including the optical axis in the first object lens 20. The regions B and C are not used to focus on the CD.

FIG. 3 is a view illustrating an optical spot formed on a DVD type of optical disc 10 by light having a wavelength of around 600 nm incident onto an object lens 20 in the optical pick-up device according to an embodiment of the present invention. Information can be recorded on and/or reproduced from a DVD by using the numerical aperture of the second region (the "B" region) in the first object lens 20 and the first region A and the third region C are also used to focus on the DVD.

FIG. 4 is a view illustrating an optical spot formed on an HD-DVD type of optical disc 10 by light having a wavelength of around 400 nm incident onto an object lens 20 in the optical pick-up device according to an embodiment of the present invention. As shown, the HD-DVD uses the first region A and the second region B without using the C region. However, according to aspects of the invention, similar to the DVD, information can be recorded on and/or reproduced from an HD-DVD by using the numerical aperture of the second region (the "B" region) in the first object lens 20, or by using the numerical aperture of the third region (the "C" region), which is larger than the numerical aperture of the second region as opposed to the second region B.

It is understood that according to other aspects, the first object lens 20 need not be sectioned into three regions of concentric circles on the optical axis. For example, the first object lens 20 can be sectioned into two regions or more than three regions having different numerical apertures.

In the first object lens 20, three wavelengths of around 400 nm, around 600 nm and around 700 nm are used in the first region (the "A" region), and the wavelength having an intermediate length (600 nm) of three wavelengths is used in the third region (the "C" region). The second region (the B region) uses the wavelengths 400 nm and 700 nm.

Hereinafter, three example object lenses designs and appropriate optical discs that may be used in an optical pick-up device according to aspects of the present invention will be described.

### (First Example of Design)

1: surface of lens
radius of curvature: 2.48673mm, thickness: 1.220000mm
refractive index: 708077.323398
aspherical coefficient
K: -0.583682, A: 0.486247E-02, B: -0.156383E-01, C: 0.104780E-01
D: -0.266329E-03, E: -0.196094E-02, F: 0.509163E-03, G: -0.211577E-04
order of diffraction: 1.000000, reference wavelength: 580.00nm
constant of hologram
C1: -1.4972E-02, C2: -6.1318E-04, C3: -5.1651 E-05
2: surface of lens
radius of curvature: -4.87608mm, thickness: 1.650040mm, refractive index: 1.0 aspherical coefficient
K: -0.796785E18, A: 0.130931 E-01, B: -0.733309E-01, C: 0.119418E+00
D: -0.891914E-01, E: 0.307483E-01, F: -0.402059E-02

| Specifications | CD | DVD | HD-DVD |
|---|---|---|---|
| Entrance Pupil Diameter(mm) | 2.38 | 3.0 | 2.95 |
| Thickness of Disc(mm) | 1.2 | 0.6 | 0.6 |
| Working Distance(mm) | 1.65 | 2.06 | 2.03 |
| Focal Length(mm) | 1.42 | 1.41 | 1.36 |
| Numerical Aperture(NA) | 0.51 | 0.65 | 0.65 |

### (Second Example of Design)

1: surface of lens
radius of curvature: 0.89201 mm, thickness: 0.700000mm
aspherical coefficient
K: -0.828174, A: 0.411225E-01, B: 0.402860E-01, C: 0.873249E-01
D: -0.122036E+00, E: 0.406357E-01, F: 0.000000E+00, G: 0.000000E+00
H: 0.000000E+00
order of diffraction: 1.000000, reference wavelength: 580.00nm
constant of hologram
C2: -1.0532E-02, C4: 1.4855E-02, C6: -2.2659E-02, C7: 1.1255E-02
2: surface of lens
radius of curvature: -3.81755mm, thickness: 0.194400mm
aspherical coefficient
K: 13.037934, A: 0.184267E+00, B: 0.364630E-02, C: -0.271803E+00
D: 0.364147E+00, E: -0.129875E+00

| Specifications | A-Disc | B-Disc | C-Disc |
|---|---|---|---|
| Entrance Pupil Diameter(mm) | 1.25 | 1.76 | 1.76 |
| Thickness of Disc(mm) | 0.8 | 0.4 | 0.4 |
| Working Distance(mm) | 0.54 | 0.78 | 0.74 |
| Focal Length(mm) | 1.42 | 1.41 | 1.36 |
| Numerical Aperture(NA) | 0.45 | 0.63 | 0.65 |

### (Third Example of Design)

1: surface of lens
   radius of curvature: 0.89201 mm, thickness: 0.700000mm
   aspherical coefficient
   K: -0.828174, A: 0.411225E-01, B: 0.402860E-01, C: 0.873249E-01
   D: -0.122036E+00, E: 0.406357E-01, F: 0.000000E+00, G: 0.000000E+00
   H: 0.000000E+00
   order of diffraction: 2.000000, reference wavelength: 690 - 750.00nm
   constant of hologram
   C2: -0.52E-02, C4: 0.7427E-02, C6: -1.133E-02, C7: 0.0627E-02
2: surface of lens
   radius of curvature: -3.81755mm, thickness: 0.194400mm
   aspherical coefficient
   K: 13.037934, A: 0.184267E+00, B: 0.364630E-02, C: -0.271803E+00
   D: 0.364147E+00, E: -0.129875E+00

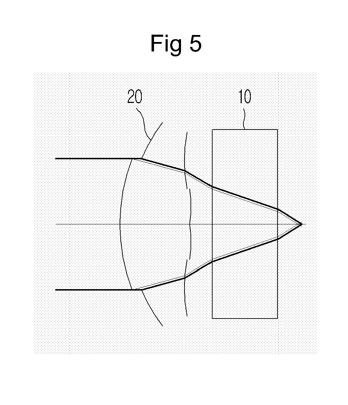

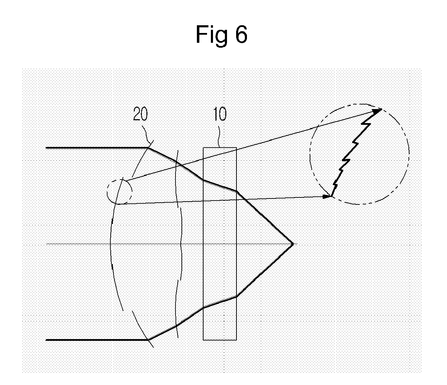

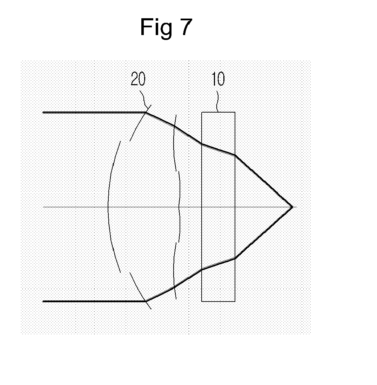

FIG. 5 is a view illustrating an optical spot formed on a CD by light having a wavelength of around 700 nm incident onto the object lens of the first example of design in the optical pick-up device according to an embodiment of the present invention. FIG. 6 is a view illustrating an optical spot formed on a DVD by light having a wavelength of around 600 nm incident onto the object lens of the first example of design in the optical pick-up device according to an embodiment of the present invention. FIG. 7 is a view illustrating an optical spot formed on an HD-DVD by light having a wavelength of around 400 nm incident onto the object lens of the first example of design in the optical pick-up device according to an embodiment of the present invention.

As apparent from the above description, the object lens and the optical pick-up device having the same according to aspects of the present invention is capable of compatibly driving various types of optical discs using different wavelengths by providing a plurality of object lenses in an optical recording/reproducing apparatus capable of recording and/or playing back high/low density optical discs. Moreover, the object lens according to aspects of the present invention is capable of compatibly playing back the various kinds of optical discs having different thicknesses or recording densities by using a plurality of wavelengths.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. An optical pick-up device capable of recording and/or reproducing a plurality of types of optical discs having four different recording densities, the optical pick-up device comprising:
a light emitting part (12, 14, 16) that emits lights having three different wavelengths corresponding to the plurality of types of optical discs, such that the light emitting part (12, 14, 16) emits light having a wavelength corresponding to a type of a loaded optical disc; and
a light collecting part (20, 22) that focuses the light having the wavelength corresponding to the type of the loaded optical disc and emitted from the light emitting part to form a spot on the loaded optical disc.

2. The optical pick-up device as claimed in claim 1, wherein three of the four plurality of types of optical discs includes an HD-DVD, a DVD, and a CD.

3. The optical pick-up device as claimed in claim 1 or 2, wherein the light emitting part (12, 14, 16) comprises a first light source (12) that emits a light having a wavelength of around 400 nm, a second light source (14) that emits a light having a wavelength of around 600 nm, and a third light source (16) that emits a light having a wavelength of around 700 nm.

4. The optical pick-up device as claimed in claim 3, wherein the light emitting part (12, 14, 16) emits light having a wavelength corresponding to at least two of the plurality of types of optical discs.

5. The optical pick-up device as claimed in claim 1, 2, 3 or 4, further comprising:
a hologram element (51) that is provided between the light collecting part (20, 22) and at least one of the plurality of light sources (12, 14, 16); and
a light detecting part that detects a signal to acquire position information of the light collecting part (20, 22) by using light diffracted from the hologram element (51).

6. The optical pick-up device as claimed in any preceding claim, wherein the light collecting part (20, 22) is an object lens (20) that uses different numerical apertures, according to the wavelengths of the lights that the light emitting part (12, 14, 16) emits, to compatibly play back any of the plurality of types of optical discs.

7. The optical pick-up device as claimed in claim 6, wherein the object lens (20) is sectioned into at least two circular regions (A, B, C) concentric about an optical axis.

8. The optical pick-up device as claimed in claim 6 or 7, wherein a first region (A) of the regions (A, B, C) of the object lens (2), which includes the optical axis, is commonly used for all of the wavelengths of the lights that the light emitting part (12, 14, 16) emits for reproducing and/or recording on three of the types of optical discs.

9. The optical pick-up device as claimed in claim 8, wherein a second region (B), which is adjacent to the first region (A), is commonly used for at least two wavelengths for reproducing and/or recording on two of the types of optical discs.

10. The optical pick-up device as claimed in claim 9, wherein the object lens is further sectioned into a third region (C) that is adjacent to the second region (B) and is used for a single wavelength for reproducing and/or recording on only one of the types of optical discs.

11. The optical pick-up device as claimed in claim 10, wherein the single wavelength is a wavelength having an intermediate length of all of the three wavelengths.

12. The optical pick-up device as claimed in claim 6, wherein the object lens is sectioned into at least three different regions of concentric circles on an optical axis, and uses the regions differently according to the type of the loaded optical disc.

13. The optical pick-up device as claimed in claim 12, wherein a first region of the three regions of the object lens is commonly used for all of the wavelengths of the lights that the light emitting part emits.

14. The optical pick-up device as claimed in any preceding claim, further comprising:
an optical path converting part (40, 60) to change a progressing direction of the light emitted from the light emitting part (12, 14, 16) and guide the light to the light collecting part (20, 22).

15. The optical pick-up device as claimed in claim 14, wherein the optical path converting part (40, 60) comprises a relay lens (47, 48) that converts the light from the light emitting part (12, 14, 16) into parallel light rays before the light is guided to the light collecting part.

16. The optical pick-up device as claimed in any preceding claim, wherein the light emitting part emits light having a wavelength of around 400 nm when the loaded optical disc is an HD-DVD or a Blu-Ray Disc, emits light having a wavelength of around 600 nm when the loaded optical disc is a DVD, and emits light having a wavelength of around 700 nm when the loaded optical disc is a CD.

17. An optical pick-up device capable of recording and/or reproducing a plurality of types of optical discs having four different recording densities, the optical pick-up device comprising:
a plurality of light sources (12, 14, 16) that emits lights having three different wavelengths corresponding to the plurality of types of optical discs; and
a plurality of object lenses (20, 22) that focus a light, having a wavelength corresponding to a loaded optical disc, emitted from the plurality of light sources (12, 14, 16) to form a spot on the loaded optical discs.

18. The optical pick-up device as claimed in claim 17, wherein the plurality of light sources comprises:
a first light source (12) that emits light having a wavelength of around 400 nm when the loaded optical disc is an HD-DVD or a Blu-Ray Disc;
a second light source (14) that emits light having a wavelength of around 600 nm when the loaded optical disc is a DVD; and
a third light source (16) that emits light having a wavelength of around 700 nm when the loaded optical disc is a CD.

19. The optical pick-up device as claimed in claim 16, 17 or 18, wherein the plurality of object lenses (20, 22) comprises:
a first object lens (20) that focuses light having a first wavelength and focuses light having a second wavelength.

20. The optical pick-up device as claimed in claim 16, 17, 18 or 19, wherein the plurality of object lenses (20, 22) comprises:
a first object lens (20) that focuses light having a wavelength of around 400 nm, focuses light having a wavelength of around 600 nm, and focuses light having a wavelength of around 700 nm onto corresponding first, second, and third types of optical discs; and
a second object lens (22) that focuses light having a wavelength of around 400 nm onto a fourth type of optical disc.

21. An object lens (20) of an optical pick-up device capable of recording and/or reproducing a plurality of types of optical disc, wherein the object lens (20) uses at least three wavelengths of light and uses different numerical apertures according to the plurality of wavelengths to compatibly reproduce the plurality of types of optical discs having different thicknesses or using different wavelengths.

22. The object lens as claimed in claim 21, wherein the object lens (20) is sectioned into at least two regions (A, B, C) of concentric circles on an optical axis, such that a first region (A) that includes the optical axis is commonly used for all three wavelengths to focus on three types of optical discs, and a second region (B) that is adjacent to the first region is commonly used for two wavelengths to focus on two of the three types of optical discs.

23. The object lens as claimed in claim 22, comprising a hologram lens on a partial surface.

24. The object lens as claimed in claim 21, 22 or 23, wherein the object lens (20) is sectioned into at least three regions (A, B, C) of concentric circles on an optical axis, such that a first region (A) that includes the optical axis is provided with a stepped area on a surface to be commonly used for three wavelengths, a second region (B) that is adjacent to the first region (A) is provided with a stepped area to restrict generation of aberrations with respect to two wavelengths, and a third region (C) that is adjacent to the second region (B) is provided with a hologram lens on a surface to restrict generation of aberrations with respect to one wavelength.

25. An optical pick-up device that uses a plurality of wavelengths to record on and/or reproduce a plurality of types of optical discs having different thicknesses, the optical pick-up device comprising:
a light source (12, 14, 16) that emits a light having a wavelength corresponding to a type of a loaded optical disc;
a first object lens (20) that uses different numerical apertures according to the wavelength of the light emitted from the light source to focus light emitted from the light source corresponding to a first type of optical disc; and
a second object lens (22) that uses different numerical apertures according to the wavelength of the light emitted from the light source to focus light emitted from the light source corresponding to a second type of optical disc.

26. The optical pick-up device as claimed in claim 25, wherein the first object lens (20) and the second object lens (22) are each provided with a stepped area or a diffraction area on at least one surface that is commonly used when recording or reproducing any of the plurality of types of optical discs.

27. The optical pick-up device as claimed in claim 25 or 26, wherein the first object lens (20) and the second object lens (22) both diffract a portion of the light emitted from the light source to be used as a secondary diffraction light according to the wavelength of the light.

28. The optical pick-up device as claimed in claim 25, 26 or 27, wherein the first object lens comprises a hologram having a depth determined based on a reference wavelength of the diffraction light that is in the range from 660 nm to 790 nm.

29. An optical pick-up device capable of recording and/or reproducing a plurality of types of optical discs, the optical pick-up device comprising:
first through third light sources (12, 14, 16) that emit lights having first through third different wavelengths corresponding to the plurality of types of optical discs, each type of optical disc having a different recording capacity according to the corresponding one of the first through third emitted wavelengths;
one or more object lenses (20, 22) that focus a light, having a wavelength corresponding to a loaded optical disc, emitted from the one or more light sources to form a spot on the loaded optical disc according to the type, the type being selectable between optical discs with four different recording capacities; and
one or more light detecting parts (30, 32) to receive the light focused onto the optical disc and reflected from the optical disc to detect an information signal.

30. The optical pick-up device as claimed in claim 29, wherein:
the first light source (12) emits light having a wavelength of around 400 nm when the loaded optical disc is an HD-DVD or a Blu-Ray Disc;
the second light source (14) emits light having a wavelength of around 600 nm when the loaded optical disc is a DVD; and
the third light source emits (16) light having a wavelength of around 700 nm when the loaded optical disc is a CD.

31. The optical pick-up device as claimed in claim 29 or 30, wherein the one or more object lenses (20, 22) comprises:
a first object lens (20) that focuses light having the first through third wavelengths.

32. The optical pick-up device as claimed in claim 29, 30 or 31, wherein the one or more object lenses comprises:
a first object lens (20) that focuses light having a wavelength of around 400 nm, focuses light having a wavelength of around 600 nm, and focuses light having a wavelength of around 700 nm; and
a second object lens (22) that focuses light having a wavelength of around 400 nm.

33. The optical pick-up device as claimed in claim 29, 30, 31, 32 or 33, further comprising:
one or more optical path converting parts (40, 60) to selectively guide a portion of the light emitted from the light sources (12, 14, 16) to one of the object lenses (20, 22) and to selectively guide the reflected light to one of the light detecting parts (30, 32).
